**Europäisches Patentamt**

**European Patent Office**

**Office européen des brevets**

(19)

(11) Veröffentlichungsnummer : **0 122 392**
**B1**

(12) EUROPÄISCHE PATENTSCHRIFT

(45) Veröffentlichungstag der Patentschrift :
**30.12.86**

(51) Int. Cl.⁴ : **F 16 L 41/08**, F 16 L 41/02,
B 21 C 37/29

(21) Anmeldenummer : **84101548.0**

(22) Anmeldetag : **15.02.84**

(54) Verfahren zur Ausrüstung eines Rohres mit einem seitlichen Anschlussstutzen.

(30) Priorität : **16.04.83 DE 3313897**

(43) Veröffentlichungstag der Anmeldung :
**24.10.84 Patentblatt 84/43**

(45) Bekanntmachung des Hinweises auf die Patenterteilung : **30.12.86 Patentblatt 86/52**

(84) Benannte Vertragsstaaten :
**AT BE CH DE FR LI LU NL**

(56) Entgegenhaltungen :
FR-A- 2 508 138
GB-A-  396 499
**SOVIET INVENTIONS ILLUSTRATED, Sektion P,Q,
Woche C 08, 2. April 1980, DERWENT PUBLICATIONS
LTD., London, Q 67**

(73) Patentinhaber : **Leybold-Heraeus GmbH
Bonner Strasse 504 Postfach 51 07 60
D-5000 Köln 51 (DE)**

(72) Erfinder : **Lüth, Armin
Pommernweg 3
D-8751 Stockstadt (DE)**

(74) Vertreter : **Leineweber, Jürgen, Dipl.-Phys.
Am Heidstamm 78 a
D-5000 Köln 40 (DE)**

EP 0 122 392 B1

## Beschreibung

Die Erfindung bezieht sich auf ein Verfahren zur Ausrüstung eines mit mindestens einem rippenförmigen Ansatz versehenen Metallrohres mit einem seitlichen Anschlußstutzen.

Es ist bekannt, Metallrohre, vorzugsweise Aluminium-Rohre, an den Stellen, an denen sie mit seitlichen Anschlüssen ausgerüstet werden sollen, auszuhalsen. Das geschieht dadurch, daß in Abhängigkeit von der Nennweite des Stutzens und der Materialdicke in der vorgesehenen Bordhöhe ein entsprechendes Loch gebohrt und mittels eines Dornes oder einer Kugel aufgetrieben wird. Anschließend wird die Aushalsung durch Planfräsen begradigt und anschweißfertig hergerichtet.

Nachteilig an diesem Verfahren ist, daß im Bereich der Aushalsung Risse entstehen können und daß der durch die Aushalsung entstehende Ansatz nur 1 bis 2 mm lang ist. In der Regel erfolgt deshalb die Verbindung dieses Ansatzes mit der anzuschließenden Stichleitung durch eine Kehlschweißnaht. Diese muß von Hand ausgeführt werden und ist deshalb schwierig herzustellen. Es entstehen unregelmäßige Durchlaßverengungen. Schließlich ist das Röntgen derartiger Kehlnähte mit hohem Aufwand verbunden, zumal bei vielen — insbesondere kerntechnischen — Anlagen eine Röntgenprüfung aller Handnähte vorgeschrieben ist.

Aus der Soviet inventions illustrated Sektion P, Q, Woche C08, 02.04.80, Derwent Publications, Q67, SU-A-666 368 ist es bekannt, ein mit einem rippenförmigen Ansatz versehenes Rohr mit einem seitlichen Anschlußstutzen auszurüsten. Dabei wird der Anschlußstutzen auf die flache Stirnfläche der Rippe aufgesetzt. Die Verbindung erfolgt ebenfalls durch eine Kehlschweißnaht mit den bereits erwähnten, erheblichen Nachteilen.

Aus der FR-A-25 08 138 ist es bekannt, bei einem mit einer Rippe versehenen Kunststoffrohr seitliche Anschlüsse vorzusehen. Dazu weist die Rippe radial gerichtete Bohrungen auf, in die ebenfalls aus Kunststoff bestehende Schlauchanschlußstutzen kraftschlüssig eingesetzt werden. Ein Verfahren dieser Art ist bei Metallrohren, in denen heiße oder aggressive Medien strömen und die deshalb besonders hohen Dichtheits- und Sicherheitsansprüchen genügen müssen, nicht anwendbar.

Ausgehend vom Inhalt der Soviet inventions illustrated, Sektion P, Q, Woche C08, 02.04.80, Derwent Publications, Q67, SU-A-666 368 liegt der vorliegenden Erfindung die Aufgabe zugrunde, ein Verfahren der eingangs genannten Art anzugeben, bei dem von Hand zu setzende Kehlnähte nicht mehr erforderlich sind.

Erfindungsgemäß wird diese Aufgabe dadurch gelöst, daß die Rippe des Rohres radial bis in das Rohrinnere durchbohrt wird und daß der Bohrung benachbarte Abschnitte der Rippe bis auf einen die Wandung des Anschlußstutzens bildenden Teil entfernt werden. Vorzugsweise erfolgen die beiden Schritte — radiale Durchbohrung der Rippe und Entfernung der benachbarten Rippenabschnitte — gleichzeitig.

Die vorgeschlagenen Maßnahmen haben den Vorteil, daß eine aufwendige und problematische Aushalsung bei der Ausrüstung von Metallrohren mit seitlichen Anschlußstutzen entfallen kann. Bei der ausschließlich mechanischen Bearbeitung des Rohres zur Bildung des Anschlußstutzens besteht nicht mehr die Gefahr von Rißbildungen. Von Hand zu setzende Kehlschweißnähte sind nicht mehr erforderlich.

Der Ansatzstutzen kann — bei entsprechender Wahl der Rippenhöhe — relativ lang sein, so daß zur Verbindung dieses Anschlußstutzens mit einer Stichleitung automatisch arbeitende Schweißzangen oder andere Orbitalschweißgeräte eingesetzt werden können. Die Gefahr unregelmäßiger Durchlaßverengungen besteht bei derartigen Schweißnähten nicht mehr. Außerdem ist eine Röntgenprüfung solcher Nähte nicht oder nur in geringem Umfang (z. B. 5 %) erforderlich. Schließlich ist die Röntgenprüfung solcher in zylindrischen Bereichen befindlicher Nähte wesentlich einfacher als die Röntgenprüfung von Kehlnähten.

Weitere Vorteile und Einzelheiten der Erfindung sollen anhand der Figuren 1 bis 7 erläutert werden.

Fig. 1 zeigt ein Rohr 1, das mit einer zur Bildung eines Anschlußstutzens ausreichend starken und ausreichend hohen Rippe 2 ausgerüstet ist. Fig. 2 zeigt einen Schnitt durch das Rohr nach Fig. 1.

Fig. 3 entspricht Fig. 2. Die Rippe 2 ist in radialer Richtung durchbohrt worden. Die Bohrung 3 reicht bis in das Innere des Rohres 1.

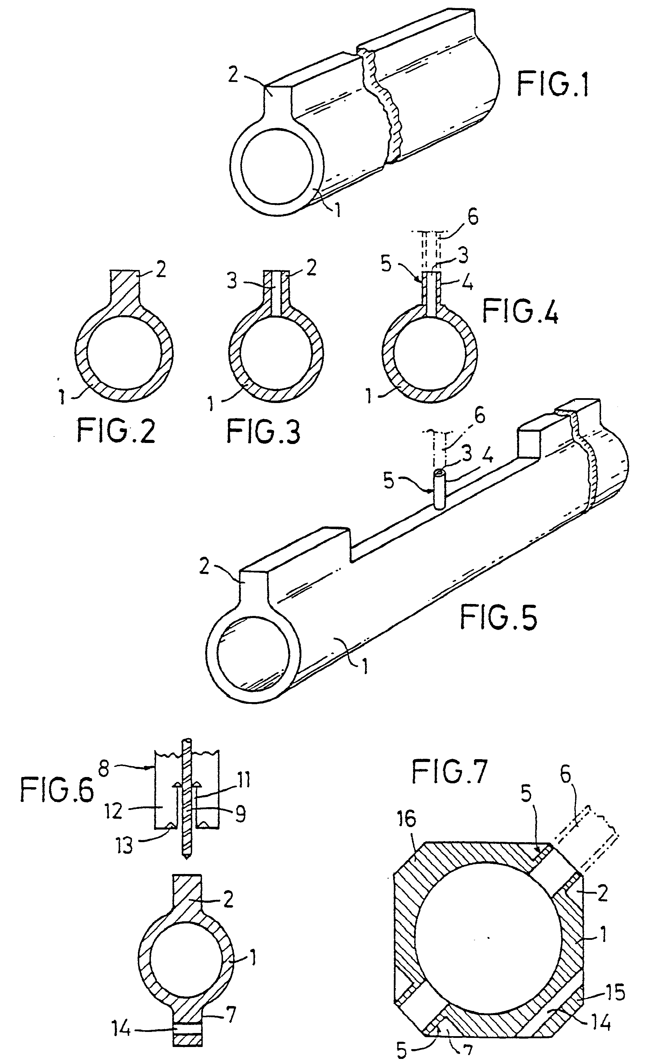

Im nächsten Verfahrensschritt werden die der Bohrung 3 benachbarten Abschnitte der Rippe bis auf einen die Wandung 4 des Anschlußstutzens 5 bildenden Teil entfernt. Die Figuren 4 und 5 zeigen das Rohr 1 nach diesem Bearbeitungsschritt. Fig. 4 ist ein Schnitt durch das Rohr nach Fig. 5 in Höhe des Anschlußstutzens 5. Die Rippe 2 ist seitlich vom Anschlußstutzen 5 so weit zu entfernen, daß ausreichend Platz für den Einsatz von z. B. einer automatischen Schweißzange vorhanden ist. Mit Hilfe dieser Schweißzange wird die lediglich gestrichelt angedeutete Stichleitung 6 mit dem Anschlußstutzen 5 verschweißt.

Fig. 6 zeigt ein Rohr 1 mit zwei Rippen 2 und 7. Zur Herstellung eines Anschlußstutzens 5 dient das Werkzeug 8. Dieses besteht aus einem zentralen Bohrer 9 zur Herstellung der Bohrung 3 (vgl. z. B. Figuren 3 und 4). Den Bohrer 9 umgibt ein Ringkanalabschnitt 11, dessen Stärke und Höhe der Wandung 4 des zu bildenden Anschlußstutzens 5 entspricht. Der Bohrer 9 ist von einem Fräser 12 umgeben, dessen kreisringförmige Stirnseite mit Wendeschneidplatten ausgerüstet ist und der Entfernung von Rippenmaterial dient. Auch im Bereich der Stirnseite des Ringkanalabschnittes 11 ist das Werkzeug 8 mit Wendeschneidplatten 13 ausgerüstet. Damit erfolgt die Bearbeitung der Stirnseite des hergestellten Anschlußstutzens 5 zwecks Vorbereitung dieser Fläche zur anschließenden Verschweißung mit einer Stichleitung.

Bohrer 9 und Fräser 12 des Werkzeuges 8 sind fest miteinander verbunden und derart bemessen, daß zur Herstellung des Anschlußstutzens 5 nur ein Bearbeitungsschritt erforderlich ist. Zweckmäßigerweise ist dabei der Außendurchmesser des aus der Rippe 2 entstehenden Anschlußstutzens 5 etwas kleiner als die Stärke der Rippe 2, so daß eine exakte zylindrische Wandung 4 entsteht. Der Bohrer 9 ragt aus dem Fräser 12 so weit hervor, daß gleichzeitig mit der Herstellung der Wandung 4 des Anschlußstutzens 5 die bis in das Innere des Rohres 1 reichende Durchbohrung 3 entstanden ist.

Die zweite Rippe 7 des Rohres 1 nach Fig. 6 ist mit einer Querbohrung 14 ausgerüstet. Dadurch soll demonstriert werden, daß die Rippen des Rohres 1 nicht nur der Herstellung von Anschlußstutzen dienen, sondern auch noch zur Halterung des Rohres 1 verwendet werden können.

Fig. 7 zeigt ein weiteres Ausführungsbeispiel für ein Rohr 1 mit mehreren Rippen 2, 7, 15 und 16. Die äußere Querschnittsform des Rohres 1 ist — bis auf Abflachungen im Bereich der Ecken — im wesentlichen quadratisch, während die innere Querschnittsform kreisförmig ist. Die vier Rippen werden gebildet von den verstärkten Wandungsbereichen im Bereich der abgeflachten Ecken. Aus einem Teil der Rippen 2 und 7 sind in der vorstehend beschriebenen Weise Anschlußstutzen 5 ausgeformt worden. Die Rippe 15 ist mit einer Querbohrung 14 zur Halterung des Rohres 1 ausgerüstet. Selbstverständlich sind auch senkrecht dazu gerichtete Sackbohrungen für diesen Zweck geeignet, so daß Rohrschellen entfallen können.

Die verschiedenen Ausführungsformen des Rohres 1 bestehen zweckmäßigerweise aus Aluminium und können durch Strangpressen hergestellt werden. In besonderen Fällen kann die Rippenzahl noch größer als vier sein.

## Patentansprüche

1. Verfahren zur Ausrüstung eines mit mindestens einem rippenförmigen Ansatz (2) versehenen Metallrohres (1) mit einem seitlichen Anschlußstutzen, dadurch gekennzeichnet, daß die Rippe (2) des Rohres (1) radial bis in das Rohrinnere durchbohrt wird und daß der Bohrung (3) benachbarte Abschnitte der Rippe (2) bis auf einen die Wandung (4) des Anschlußstutzens (5) bildenden Teil entfernt werden.

2. Verfahren nach Anspruch 1, dadurch gekennzeichnet, daß die beiden Schritte — radiale Durchbohrung der Rippe (2) und Entfernung der benachbarten Rippenabschnitte — gleichzeitig durchgeführt werden.

3. Verfahren nach Anspruch 2, dadurch gekennzeichnet, daß gleichzeitig mit der Bildung des Anschlußstutzens (5) aus der Rippe (2) eine mechanische Bearbeitung seiner Stirnseite zur Vorbereitung eines sich anschließenden Verschweißens mit einer Stichleitung (6) durchgeführt wird.

## Claims

1. Procedure to provide a metal tube (1) having at least one rib-shaped projection (2) with a lateral tubulation, characterized in that the rib (2) of the tube (1) is radially bored through to the tube interior and that the rib sections (2) adjoining the bore (3) are removed but for that part forming the wall (4) of the branch tubulation (5).

2. Procedure according to Claim 1, characterized in that the two steps — radial boring of the rib (2) and removal of adjoining rib sections — are simultaneously accomplished.

3. Procedure according to Claim 2, characterized in that, while shaping the branch tubulation (5) from the rib (2), its face is at the same time machined to prepare subsequent welding of a tap line (6).

## Revendications

1. Procédé pour équiper d'un raccord latéral un tube métallique (1) muni d'au moins une saillie (2) en forme de nervure, caractérisé en ce qu'on perce la nervure (2) du tube (1) de part en part dans la direction radiale pour déboucher dans la lumière intérieure du tube et qu'on enlève les segments de la nervure (2) qui sont adjacents au perçage (3), à l'exception d'une partie qui forme la paroi (4) du raccord (5).

2. Procédé selon la revendication 1, caractérisé en ce que les deux phases — perçage radial de la nervure (2) et élimination des segments adjacents de la nervure — sont exécutées simultanément.

3. Procédé selon la revendication 2, caractérisé en ce que, simultanément avec la formation du raccord (5) à partir de la nervure (2), on exécute un usinage mécanique de sa surface frontale pour la préparation du soudage ultérieur de ce raccord à une conduite de piquage (6).

0 122 392

FIG.1

FIG.2

FIG.3

FIG.4

FIG.5

FIG.6

FIG.7